# EUROPEAN PATENT SPECIFICATION

(11) **EP 3 161 919 B1**
(45) Date of publication and mention of the grant of the patent: **28.12.2022**
(21) Application number: 15753761.4
(22) Date of filing: 29.06.2015
(51) Int. Cl.: H02H 1/00, H01F 38/30, H02H 7/20

(54) **DEVICE FOR PROTECTING A DIRECT CURRENT PHOTOVOLTAIC PLANT**
VORRICHTUNG ZUM SCHUTZ EINER GLEICHSTROMFOTOVOLTAIKANLAGE
DISPOSITIF DE PROTECTION D'UNE CENTRALE PHOTOVOLTAÏQUE À COURANT CONTINU

(30) Priority: 30.06.2014 IT BO20140357
(43) Date of publication of application: 03.05.2017
(73) Proprietor: Societa' Elettrica S.r.l., 48034 Fusignano (Ravenna) (IT); Marangoni, Euro, 48022 Lugo (Ravenna) (IT)
(72) Inventor: BAMBI, Carlo, I-40066 Pieve di Cento (Bologna) (IT); RANDI, Armando, I-48012 Bagnacavallo (Ravenna) (IT); MARANGONI, Euro, I-48022 Lugo (Ravenna) (IT)
(74) Representative: Conti, Marco
(86) International application number: PCT/IB2015/054869
(87) International publication number: WO 2016/001824

(56) References cited:
- WO-A1-96/30989
- WO-A1-2011/161129
- WO-A2-2011/151267
- DE-B3- 10 359 532
- US-A- 3 919 626
- US-A1- 2011 141 644

## Description

### Technical field

This invention relates to a device and a method for protecting photovoltaic systems from electric arcs.

### Background art

The technical sector of the invention is that of devices for protecting from electric arcs direct current electrical systems, in particular photovoltaic plants having one or more photovoltaic panels connected to an inverter, with or without a storage battery. It should be noted that photovoltaic panel means a matrix of photovoltaic modules configured to generate an electric current in response to solar irradiation received by the panel.

The electric current delivered by the photovoltaic modules is continuous, so the panels, that is to say, the photovoltaic modules, are connected to an inverter, that is, to a voltage converter, which transforms the continuous current received as input to an alternating voltage made available at the outlet, for feeding user devices or for feeding into an electricity network. As is known, photovoltaic plants are not without faults and consequent possible fires; the faults can concern the photovoltaic modules themselves or other parts of the plant.

In light of this, the current practice is to equip the photovoltaic plants with switches aimed at interrupting the current in the plant, or in a part of it, in the event of a fault, before there a fire occurs; the switches of this type are generally known as AFCI (Arc Fault Circuit Interrupter).

These interrupters are activated by fault detection devices, that is protective devices aimed at detecting the presence of a fault in the plant, to provide as output a signal for controlling the protective interrupter. Examples of these fault detection devices and of photovoltaic plants equipped with protective devices are described in the following patent documents: WO9525374, US20120318320, US20130092208, EP1709504, EP2621045, US2012318320A1, US2011/141644A1, WO2011/151267A2, US3919626, WO96/30989

, DE10359532 and WO2011/161129A1. Generally speaking, an important problem linked to the protective devices for photovoltaic plants is that of false faults, that is, undesired interventions of the protective device, because they are caused not by a fault, but by a disturbance generated outside the plant or, more often, by the inverter of the plant.

In light of this, it should be noted that a problem of the prior art protective devices is that they are complex to install and to adjust, for adapting them to the specific plant and to reduce the risk of false operations.

Another problem associated with the protective devices for the photovoltaic plants is that of the selectivity of the intervention. In effect, generally speaking a photovoltaic plant comprises a plurality of groups of photovoltaic modules; the various groups of modules are connected to each other in parallel, whilst, inside of each group, the modules are connected in series. If a protective device is provided downstream of each group of modules, the intervention of the protective devices occurs selectively, that is, solely for the group of modules affected by the fault, avoiding the intervention of the other protective devices.

Also for the purposes of the selectivity, the prior art protective systems are complex and, in many cases, presuppose that the plant has a particular configuration.

This adversely affects the versatility of the protective device, which cannot be applied effectively to existing photovoltaic plants, but which must be used only on plants constructed *ad hoc.*

### Aim of the invention

The invention is set out in the appended claims. The aim of this disclosure is to provide a device and a method for protecting from electric arcs direct current photovoltaic plants, having one or more photovoltaic modules connected to an inverter, which overcome the above-mentioned drawbacks of the prior art.

More specifically, the aim of this disclosure is to provide a device and a method for protecting from electric arcs direct current photovoltaic plants (having one or more photovoltaic modules connected to an inverter), which are reliable and allow an easy and fast installation, even on existing photovoltaic plants.

A further aim of this disclosure is to provide a protective device for photovoltaic plants which is particularly robust.

Another aim of this disclosure is to propose a protective device for photovoltaic plants which allows a selective protection to be made in a particularly simple manner. The above-mentioned aims are fully achieved by the device and method for protecting photovoltaic systems from electric arcs according to the appended independent claims .

More specifically, the device according to this disclosure is a device for protecting from electric arcs direct current photovoltaic plants, having one or more photovoltaic modules connected to an inverter.

The photovoltaic plant comprises one or more photovoltaic modules, each having a plurality of photovoltaic panels connected in series, an inverter connected downstream of the photovoltaic modules and one or more protective switches inserted between the inverter and the photovoltaic modules.

According to the disclosure, at least one protective device, inserted in a branch connecting the photovoltaic modules to the inverter, for detecting the presence of an electric arc in the plant and for generating a fault signal and transmitting it to the protective interrupter so as to command the opening.

The plant preferably comprises a plurality of protective devices, a protective device for each group (array) of photovoltaic panels connected in series. Alternatively, the plant comprises a protective device for each photovoltaic module. Alternatively, the plant comprises a protective device for all the photovoltaic modules, positioned downstream of them, but preferably always upstream of the inverter on the continuous side (or of a storage battery recharging regulator, if present).

The protection device comprises a sensor provided with a ring made of ferromagnetic material and designed to generate a signal representative of a current passing through a cable inserted in the ring.

Preferably (according to another aspect of this invention), the device (that is, the sensor) comprises a plurality of the rings made of ferromagnetic material. These rings are integrated to form a sensor defining a plurality of rings; each ring is designed to receive (made to pass inside the ring) a corresponding cable connected to a respective group (array) of photovoltaic modules. Each of the cables is then connected to the inverter, or to a collection box for the cables (positioned, where present, between the inverter and the groups of modules).

Each ring defines a signal TA.

Preferably, the rings are embedded in a matrix of dielectric material (for example resin).

Preferably, the rings are positioned with the respective holes defining parallel axes. This facilitates the coupling of the cables in the rings.

Preferably, at least two of the rings of the plurality are positioned offset along a longitudinal direction defined by the axes of the respective holes, and at a defined distance between the respective axes which is less than the diameter of rings. This makes it possible to make the sensor (that is, the structure comprising the plurality of rings) with particularly reduced dimensions.

The protective device comprises a box-shaped body containing an electronic card of the device.

More specifically, the protective device (that is, the electronic card) comprises a conditioning step having a band-pass filter, for conditioning the signal detected by the sensor.

It is observed that the examples included in the present disclosure and regarding a single band-pass filter are not according to the invention and are present for illustration purposes only.

The protective device (that is, the electronic card of it) also comprises a comparator circuit (threshold type), having a voltage reference value which is set and adjustable (that is, it can be re-set by the person who installs the device), designed to receive as input the conditioned signal.

The protective device (that is, the electronic card) comprises a processor, connected to the comparator to generate a fault signal as device output. The term "processor" means any component or group of electronic components designed to receive as input a signal and to perform processing to make available as output another signal, as a function of the input signal. For example, the processor may be achieved by an electronic circuit (analogue or digital), or by using a suitably programmed CPU, or another technical solution designed to make a control logic.

The protective device (that is, the electronic card) also comprises a counter, that is to say, a starter.

The processor is programmed to generate the fault signal as a function of a situation in which the reference amplitude value is exceeded by the detected and conditioned signal.

More specifically, the processor is programmed for generating the fault signal as a function of a situation in which the reference value is exceeded by the detected and conditioned signal for a predetermined interval of time; in other words, the processor is programmed for generating the fault signal when the amplitude of the detected and conditioned signal exceeds the reference value and remains above the reference value for the predetermined interval of time from when it is exceeded.

This predetermined interval of time is detected by the processor through the counter, that is, through an activation of the counter in response to a situation in which the reference value of the comparator is exceeded by the detected signal.

If, after the reference value of the comparator is exceeded by the detected and conditioned signal, the amplitude of the signal detected and conditioned falls below the reference value before the predetermined interval of time has passed, the counter is reset and configured to restart the counting of the predetermined interval of time, starting from a successive exceeding of the reference value by the amplitude of the detected and conditioned signal.

This prevents false operations and makes the device particularly reliable.

In effect, it should be noted that the electric arc in the photovoltaic plant is supported by solar energy and at steady state generates an undulation (ripples) in the current delivered by the photovoltaic module or group of modules in which the arc has sparked.

Consequently, if the increase in voltage in the branch in which the protective device is inserted does not maintain a certain amplitude, in a predetermined frequency band, for a certain length of time, it is reasonable to assume that it is not attributable to an electric arc sparking in the plant.

It should be noted that the presence of the ferromagnetic ring (which constitutes a signal TA and may be openable and reclosable) facilitates the installation of the device, as it avoids having to cut or detach the cable of the plant in which the device is to be inserted or the circuit opened.

More specifically, the TA is separated relative to an electronic card to which it is connected, in the sense that it is not integrated in the card, but is connected to it by an electrical cable. For this reason, the TA can be positioned at a distance from the electronic card of the device. This allows the TA to be inserted in the electric cable to which it must be coupled, simply by disconnecting the electrical cable from a relative clamp on a corresponding panel and passing the disconnected end in the TA, and then repositioning the TA and the relative electronic card in the most convenient positions, suitably spaced apart from each other.

As regards the band-pass filter, it should be noted that the low frequencies are cut to eliminate any low frequency disturbances generated by the inverter, whilst the higher frequencies are cut to eliminate a pulse associated with a transient triggering the arc, as well as to eliminate various disturbances and noise that may be present in the plant. Normally, the DC component is already cut by the sensor, in the case it is a toroid, which constitutes a transformer; in any case, the cutting of the DC component is also assured by the filter.

Preferably, the band-pass filter can be adjusted by means of regulating or selector elements. More specifically, the band-pass filter is adjustable for moving the centre band; the band-pass filter can also be adjusted for varying (widening or narrowing) the width of the band defined by the filter. Preferably, the band-pass filter is also adjustable to render the passband defined by the filter asymmetric relative to the centre band, differentiating the gradient of the transfer function between the lower cut and the upper cut.

These adjustments can be made possible, for example, by means of an LC filter having an inductance and capacity adjustable separately, through corresponding adjusting or selector elements.

These adjustments are useful for allowing the person who installs the device to adjust it in the field in a particularly simple and effective fashion, thus guaranteeing a correct detection of the arc excluding the disturbances due to the inverter or to other sources of noise.

Preferably, the device also comprises (at least) an element for adjusting the voltage (that is, current), known as a trimmer, positioned downstream of the TA.

Preferably, the device comprises a first adjusting element, upstream of the conditioning stage, and a second adjusting element, downstream of the conditioning stage; the first and second adjusting elements are both downstream of the TA.

The purpose of the adjusting element downstream of the TA is to perform a conditioning of the signal before the filtering of the signal in the electronic card; this facilitates work of the band-pass filter.

Preferably, the processor is programmed, that is, designed, to derive, after the first reference value of the comparator is exceeded for the first time, a variation in the unit of time of the current amplitude detected by the sensor. This makes the device more robust and improves the selectivity of the safety device for detecting the fault, if there are various protective devices, each inserted downstream of a corresponding group of photovoltaic modules.

It should be noted that, preferably, the photovoltaic plant comprises cut-off devices for the various branches to which corresponding groups of panels or photovoltaic modules are connected.

In light of this, the fact that the protective device allows selectivity of the intervention is particularly useful, because it allows only the branch affected by the fault to be opened.

In any case, even in the absence of cut-off devices for individual branches, selectivity reduces the intervention times for fault solving and therefore the out of service due to the provision of the safety for the plant opening the protective interrupters.

The invention according to this description also provides a method for installation and calibration of a protective device of a photovoltaic plant.

After having coupled the sensor of the protective device downstream of the groups of modules, a test is performed in which an arc is simulated, and an output signal from the conditioning stage is then detected; this allows the amplitude of the signal under fault conditions to be assessed, for a certain configuration of the filter of the conditioning stage.

As a function of this detection, the reference value of the comparator is adjusted in such a way that the signal detected exceeds that value.

Moreover, the output signal from the conditioning stage is detected under conditions without an arc, for detecting the level of background noise and disturbances in the plant, for a certain configuration of the filter of the conditioning stage.

If the amplitude value of the signal detected (again, downstream of the conditioning stage) in the absence of an arc exceeds the reference value of the comparator, the value detected in the absence of an arc is compared with that detected in the presence of a simulated arc.

If the amplitude value downstream of the conditioning stage for the signal detected in the absence of an arc is significantly less than that detected in the presence of a simulated arc, the reference value of the comparator is, for example, adjusted by increasing it up to a value conveniently greater than the value of the signal detected in the absence of an arc and lower than that of the signal detected in the presence of a simulated arc. However, if the amplitude value downstream of the conditioning stage signal detected in the absence of an arc is greater or just less than that detected in the presence of a simulated arc, the setting of the filter of the conditioning stage is adjusted, shifting the passband until the amplitude value downstream of the conditioning detected in the absence of a simulated arc is reduced, in proportion to that detected in the presence of a simulated arc.

This ensures that the device does not activate in an undesired fashion.

The invention according to this description relates also to a method for protecting a photovoltaic plant according to claim 9; the photovoltaic plant (in direct current) comprises at least one photovoltaic module provided with a plurality of photovoltaic modules (that is, panels) connected in series (string), an inverter connected downstream of the photovoltaic modules, a protective interrupter inserted between the inverter and the photovoltaic module, and a protective device, inserted in a branch connecting the photovoltaic module to the inverter, for detecting the presence of an electric arc in the plant and for generating a fault signal and transmitting it to the protective interrupter so as to command its opening.

According to this method, the installation of the protective device comprises a step of inserting the cable defining the branch connecting the photovoltaic module to the inverter, inside a through hole of the protective device defined by the ring made of ferromagnetic material forming the sensor.

Moreover, the installation of the protective device comprises a step of adjusting the protective device.

This adjustment, in turn, comprises setting up a reference value of the voltage of the threshold comparator (for example as described above).

Moreover, the adjustment of the protective device comprises a setting up of a predetermined time interval, so that a processor of the protective device is programmed to generate the fault signal as a function of a situation in which the reference value is exceeded by the signal detected by the sensor, at least at two successive times after the predetermined time interval.

The adjustment of the protective device comprises a setting up of the band-pass filter intended to condition the signal detected by the sensor, upstream of the comparator.

Preferably, the band-pass filter is configured for eliminating the signals having a frequency of less than 20 kHz and greater than 2.5 MHz.

The adjustment of the protective device, again with regard to the setting up or adjusting of the conditioning stage, comprises the selecting and setting up of a filter between two or more, but preferably three or more band-pass filters, operatively connected in parallel and defining respective bands occupying different and consecutive portions of a predetermined frequency range.

This makes the system particularly versatile and robust, as well as simple and practical to install. In effect, the disturbances generated by the inverter in use in the photovoltaic panels have an amplitude much higher than the signal generated by the arc, but they are concentrated in a portion of the frequency spectrum which is relatively small, compared with the band in which the fault signal can be detected.

Preferably, the conditioning stage comprises a plurality of band-pass filters having respective through bands located in the frequency range of between 20 kHz and 2.5 MHz.

Preferably, each filter of the plurality of band-pass filters defines a passband of less than 250 kHz.

More specifically, preferably, the conditioning stage comprises a plurality of band-pass filters having respective through bands located in the range of between 400 kHz and 2.5 MHz. In that case, each filter of the plurality of band-pass filters defines a passband of approximately 200-250 kHz. Alternatively or in addition, the conditioning stage comprises a plurality of band-pass filters having respective through bands located in the range of between 10 kHz and 200 kHz. In that case, each filter of the plurality of band-pass filters defines a passband of approximately 5-10 kHz. Alternatively or in addition, the conditioning stage comprises a plurality of band-pass filters having respective through bands located in the range of between 255 kHz and 2.5 MHz. In that case, each filter of the plurality of band-pass filters defines a passband of approximately 5-10 kHz.

In an example, which is not part of the present invention, the conditioning stage comprises a single adjustable band-pass filter. This band-pass filter is adjustable to define a passband having a centre band frequency which can be set in a range of predetermined frequencies, for example in the range between 255kHz and 2.5 MHz. This passband has an amplitude preferably in the range 5-10 kHz. The band-pass filter can be adjusted through one or more adjusting elements; preferably, the one or more adjusting elements of the band-pass filter are accessible by the user (for example, comprising control means located outside the box-shaped body).

As regards the invention according to this description, attention is also drawn to the following.

The device according to this invention detects the presence of electric arcs, mainly serious (potential sources of fire) in direct current which may trigger in the wiring of the photovoltaic panels or in the main components of the photovoltaic plant (cables, conductors, connectors, connections, clamps, terminal boards, switches, fuse holders, modules, cards and control panels in the field collecting cables in general, etc.).

The sensor is a ferrite transformer which detects the alternating current harmonic component arising from the electric arc, in a similar fashion to that of a current transformer, so without carrying the detection device to string potential.

The conditioning stage is configured to amplify the signal of the sensor, and to perform a band filtering, to control only a well determined area of the spectrum and therefore remain immune from noise coming from the inverters and from other disturbances which could be picked up by the wiring, by the panels or by the system as a whole. The conditioning stage also comprises, preferably upstream of the filter and the amplifier, a system of protections, to protect the device in the case of electric arcing or signals with too high an amplitude.

The comparator detects a peak value (of amplitude) of the signal detected and conditioned and compares it with a minimum threshold value (adjustable).

The processor, after exceeding the threshold of the comparator, activates the counter by means of a timer (adjustable).

A fault signal generated by the processor determines the switching and energising of a relay, the switching contacts of which, preferably of the "clean type" (that is, without voltage, that is to say, with a zero potential difference), are available in a card for releasing safety devices and/or generating alarms and signals (for example, by a phone call, text, e-mail or other signalling systems).

Preferably, the protective device comprises an output stage, comprising a memory for storing the detection of the arc. Moreover, in response to the detection of the arc, the processor commands the switching ON of a LED, to inform personnel inspecting the plant.

Preferably, the device is configured to keep the LED switched on even after the signal detected and filtered drops in terms of amplitude below the reference value of the comparator; preferably, the device is configured in such a way that the relay de-energises after the signal detected and filtered drops in terms of amplitude below the reference value of the comparator.

The protective device comprises, in addition to the ferrite sensor, a card on which the electronic components are mounted; the card preferably has an external power supply of from 12 to 24 V AC, or from 15 to 27 V DC. Moreover, according to another aspect of this disclosure, the device preferably comprises an autotest module for the device.

This autotest module is connected (or preferably integrated) with the electronic card of the device and is configured for generating a test signal at the inlet to the electronic card (for example, at the inlet to the conditioning stage) and to check a response signal (for example, the fault signal generated by the processor).

The autotest module may be implemented by the same processor, or it might be an accessory element separated from the processor.

Preferably, the autotest module is connected to the timer (or to a further timer) for repeating a predetermined self-diagnosis procedure at predetermined time intervals, in a cyclical fashion (for example, every 10 hours). The repetition cycle of the test may occur with a frequency of less than 600 seconds.

The autotest module is configured for generating an alarm signal if the result of the test is negative and detects a malfunction of the device.

The autotest module is configured to generate a test current which passes through the conditioning stage and the comparator. The autotest module is configured to generate the alarm signal if the alarm signal is not recognised by the device; in this case, the device is programmed to open the protective interrupter, for cutting the voltage to the photovoltaic modules protected by the device.

In the case of a negative result of the test, the alarm signal may be emitted by the switching on of a warning light simultaneously with the emission of the tripping command by the detector device with the consequence of putting under safe conditions the portion of circuit monitored.

### Brief description of the drawings

This and other features of the invention will become more apparent from the following detailed description of a preferred, non-limiting example embodiment of it, with reference to the accompanying drawings, in which:

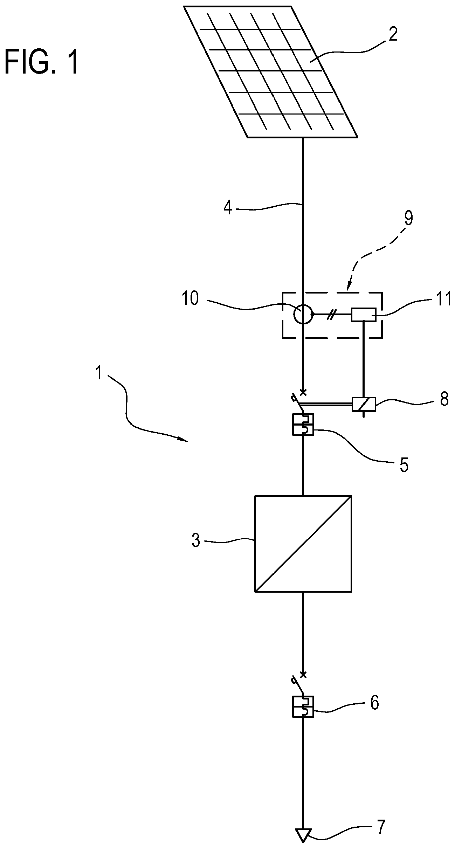

- Figure 1 schematically illustrates a photovoltaic plant with a protective device according to this invention;

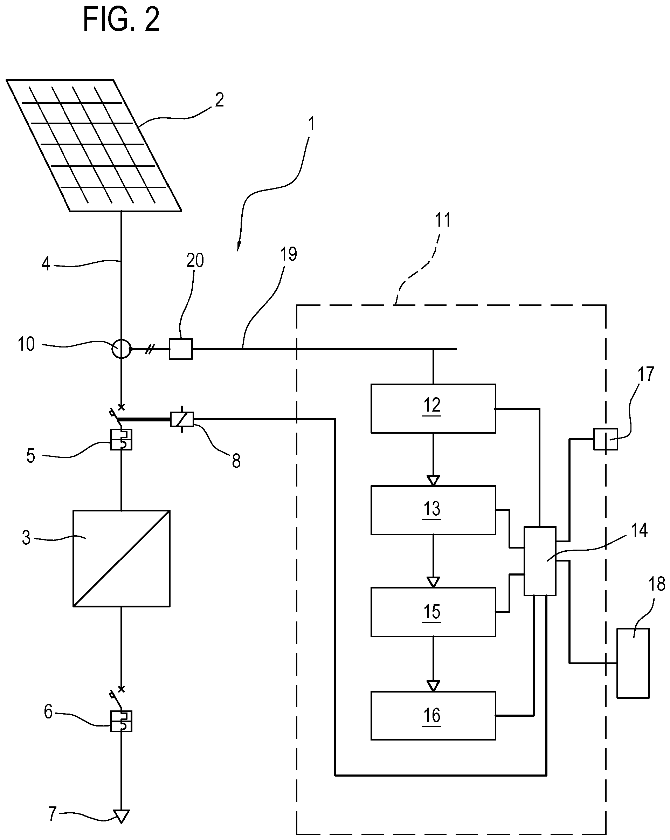

- Figure 2 illustrates the plant of Figure 1, in which are illustrated the functional elements of the electronic card of the protective device;

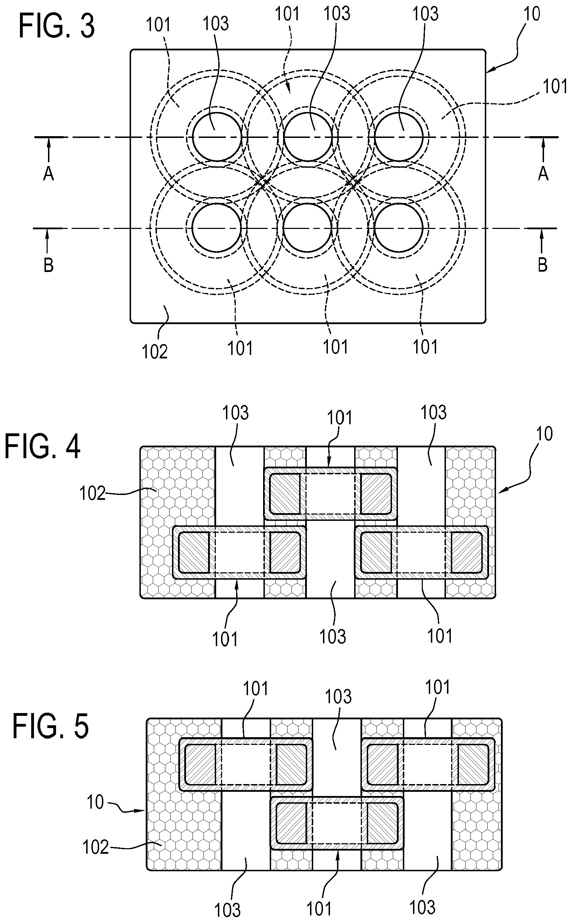

- Figure 3 illustrates a sensor of the invention of Figure 1 according to a first variant embodiment;
- Figure 4 illustrates the sensor of Figure 3, in a cross section according to the line A-A in Figure 3;
- Figure 5 illustrates the sensor of Figure 3, in a cross section according to the line B-B in Figure 3;

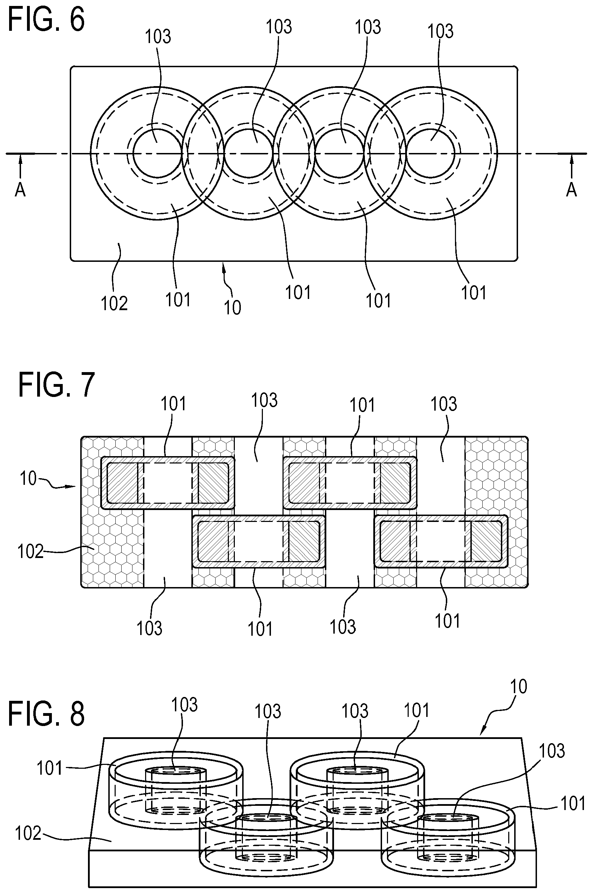

- Figure 6 illustrates the sensor of Figure 3 in a variant embodiment;
- Figure 7 illustrates a transparent perspective view of the sensor of Figure 6;
- Figure 8 illustrates the sensor of Figure 6, in a cross section according to the line A-A in Figure 6.

### Detailed description of preferred embodiments of the invention

In the accompanying drawings, the numeral 1 denotes a photovoltaic plant.

The photovoltaic plant 1 comprises one or more photovoltaic modules 2. Each photovoltaic module 2 has a plurality of photovoltaic panels (not illustrated), preferably connected in series, to form a group of photovoltaic panels (string).

The modules photovoltaic 2 are connected to an inverter 3.

A protective interrupter 5 is inserted in a branch 4 connecting the photovoltaic modules 2 (or a single photovoltaic module 2) to the inverter 3; the photovoltaic plant 1 comprises a plurality of protective interrupters 5, inserted between the inverter 3 and respective photovoltaic modules 2.

A further electrical protection 6 is inserted downstream of the inverter 3, between the inverter 3 and an AC electrical network 7.

The numeral 8 denotes a coil for opening the protective interrupter 5. This coil 8 is a relay for activating the protective interrupter 5.

The photovoltaic plant 1 also comprises at least one protective device 9, designed to detect the presence of an electric arc in the photovoltaic plant 1.

The protective device 9 is inserted in the branch 4 connecting the photovoltaic modules 2 to the inverter 3.

The protective device 9 configured for generating a fault signal, in response to detecting an electric arc.

The protective device 9 is connected to the coil 8 for opening the protective interrupter 5, for determining an opening by means of the fault signal.

The protective device 9 comprises a sensor 10 which can be coupled to an electrical cable for detecting the current which passes through it. Operatively, the sensor 10 is coupled to the branch 4 connecting the photovoltaic modules 2 to the inverter 3.

The sensor 10 preferably comprises a ring made of ferromagnetic material (for example ferrite). This simplifies the installation of the device 9 on existing plants 1, avoiding the cutting of cables.

Preferably, the ring has a first and a second half-ring movable between an open position and a closed position. This further simplifies the installation of the device 9 on existing plants 1, also avoiding the detachment of an end of a cable from a terminal or the opening of a connector.

The protective device 9 also comprises an electronic card 11.

Preferably, the sensor 10 is separate from the electronic card 11 for ease of installation and to reduce interference and overheating.

In an example embodiment, the sensor 10 is connected to the electronic card 11 by a connecting cable 19.

The sensor 10 defines a signal TA.

Preferably, the sensor 10 has a number of turns of between 5 and 20; in an example embodiment, it has 8 to 12 turns, preferably 10.

The cross section of the ferrite ring of the sensor 10 is relatively large, for example between 140 and 165 square mm, in particular, for example, 155 square mm, to prevent the TA saturating in the presence of a continuous current component.

Preferably, the sensor 10 defines a detection band in the range 20 kHz - 3 MHz. The passband of the sensor 10 is tuned with the passband defined by the electronic card.

The protective device 9 (in particular the electronic card 11 of the protective device 9) comprises a stage 12 for conditioning a signal detected by the sensor 10.

The conditioning stage 12 comprises a band-pass filter, for conditioning the signal detected by the sensor 10.

The protective device 9 (in particular the electronic card 11 of the protective device 9) comprises a comparator 13 (preferably threshold type); the comparator 13 has a voltage reference value which is set and adjustable, for receiving as input the conditioned signal.

Moreover, the protective device 9 (in particular the electronic card 11 of the protective device 9) comprises a processor 14 to generate a fault signal at the output from the protective device 9.

It should be noted that the comparator 13 might also be defined by the processor 14.

The protective device 9 (in particular the electronic card 11 of the protective device 9) also comprises a counter 15 or timer.

The processor 14 is programmed to activate the counter in response to a situation in which the signal detected exceeds the reference value (of the comparator 13).

The processor 14 is programmed to generate the fault signal as a function of a situation in which the reference value is further exceeded by the signal detected, after a predetermined time interval from the first situation. It should be noted that, preferably, the predetermined time interval is adjustable, that is, can be re-set. This increases the possibility of adaptation of the protective device 9 to the conditions of the plant in which it is inserted, during the installation step, making the device particularly reliable and robust.

Preferably, the processor 14 is designed to allow an adjustment of the predetermined time interval.

Also, preferably, the protective device 9 (in particular the electronic card 11 of the protective device 9) comprises a memory 16.

Preferably, the protective device 9 (in particular the electronic card 11 of the protective device 9) comprises an indicator 17, having at least one ON configuration and one OFF configuration. Preferably, the indicator 17 is a luminous indicator (for example a LED or another warning light), but it can also be an acoustic or other type of indicator.

Preferably, the processor 14 is programmed to record in the memory 16 data representing an event generating the fault signal; that is to say, the processor 14 is programmed to record in the memory the events of detecting the electric arcs in the photovoltaic plant 1 in which the protection device 9 inserted.

Preferably, the processor is programmed for setting up the indicator 17 in the ON configuration, in the case of generating the fault signal, that is, after detecting an electric arc in the photovoltaic plant 1 in which the protection device 9 is inserted.

The protection device 9 also comprises a power supply unit, preferably 12 to 24V AC or 15 to 27V DC.

In an example embodiment, the device 9 also comprises an adjusting element 20 (of voltage or current), positioned downstream of the sensor 10; for example, an adjusting element 20 is fitted on the card 11. As regards the conditioning stage 12, in an example embodiment, it is configured preferably to cut at frequencies lower than 20kHz and higher than 2.5 MHz (or preferably higher than 2 MHz). In another adjusting example, the passband defined by the conditioning stage 12 ranges from 250 kHz to 2.5 MHz; in other words, the passband defined by the band-pass filter is selectable within the frequency range of 250 kHz to 2.5 MHz.

According to the invention, the protective device 9 also comprises a selector (not illustrated in the drawings), consisting, for example, of a lever or a pushbutton. The selector is connected to the conditioning stage 12 for modifying a configuration as a function of an operating position of the selector.

The conditioning stage 12 has a plurality of band-pass filters; according to the invention, the band-pass filters of the plurality can be selected selectively and alternatively;each of the band-pass filters of the plurality can be inserted or removed, according to the operating position of the selector.

Thus, operatively, these band-pass filters are connected in parallel and can be set up alternatively to one another (using the selector).

These band-pass filters define corresponding through bands located in succession in spectrum of frequencies; that is, the two or more band-pass filters define corresponding through bands occupying different and consecutive portions of a predetermined frequency range.

In an example , which is not part of the present invention, the conditioning stage 12 comprises a (single) adjustable band-pass filter.

For example, the conditioning stage 12 comprises a band-pass filter of the LC type, in which the inductance and the capacity of the filter are adjustable through adjusting elements (or selectors).

In this example, the conditioning stage 12 may comprise a first adjusting element (or selector), designed to vary the inductance of the LC filter, and a second adjusting element (or selector), designed to vary the capacity of the LC filter. In this case, the user (installer) can easily select the position of the centre band and the width of the passband defined by the conditioning stage 12, with the possibility also of rendering the function for transferring the filter particularly steep at the lower end of the cut and relatively gentle at the upper cut, or vice versa (thus defining a passband which is asymmetrical with respect to the frequency of centre band).

This allows a particularly simple adjustment of the protective device 9, during the installation in the photovoltaic plant 1, allowing an installer to select the most suitable passband for minimising, at the outlet of the conditioning stage 12 and at the inlet of the comparator 13, the amplitude of the disturbances present in the plant 1, especially those generated by the inverter 3.

In an example embodiment, the passbands of the band-pass filters of the plurality of band-pass filters have respective amplitudes of less than 200 kHz.

In an example embodiment, the passbands of the band-pass filters of the plurality are located in the frequency ranges 400 kHz - 2.5 MHz; in that case, preferably, the passband of the band-pass filters of the plurality (located in the frequency ranges 400 kHz - 2.5 MHz) has an amplitude of approximately 200 kHz.

In an example embodiment, in addition or alternatively, the passbands of the band-pass filters of the plurality are located in the frequency ranges 10 kHz - 200 kHz; in that case, preferably, the passband of the band-pass filters of the plurality (located in the frequency ranges 10 kHz - 200 kHz) has an amplitude of approximately 5-10 kHz.

In an example embodiment, the passband of the filter (of the conditioning stage 12) can be adjusted in amplitude from a minimum of 100 kHz to a maximum of 400 kHz.

In an example embodiment, the filter (of the conditioning stage 12) can be adjusted to move the centre band frequency in a range of between 250 kHz to 2.5 MHz.

In an example embodiment, each of the first and second adjusting elements has a number of positions which can be selected between 12 and 18, for example 15; this means that each adjusting element is configured for selecting a corresponding number of values for a corresponding parameter for setting up the filter (for example L and/or C). In the example in which each of the first and second adjusting elements has 15 positions, the band-pass filter defines 225 possible combinations which can be selected (centre band).

Preferably, the sensor 10 is a structure encapsulating a plurality of rings 101 made of ferromagnetic material. The rings 101 are encapsulated in a matrix 102 of dielectric material. The sensor 10 defines a plurality of through holes 103, one for each ring 101. Preferably, the holes 103 have parallel axes.

Preferably, two or more rings 101 are positioned in the matrix 102 offset, so that the respective axes of the holes 103 are spaced by a distance less than the diameter of the rings, thereby rendering the structure particularly compact in size.

As regards a coupling of the output cables from the groups of photovoltaic panels to the rings 101 of the sensor 10, attention is drawn to the following.

Each cable has an outfeed and an infeed. Preferably, only the outfeed cable is passed inside the hole 103 of the ring 101.

Alternatively, the outfeed cable is passed in the hole 103 in a direction of insertion and the infeed cable is passed in the same hole 103, but in the direction opposite to the direction of inserting the outfeed cable. This allows an increase in the sensitivity of the device, since the signal relating to any photovoltaic arc is amplified.

It should be noted that the device 9 is also equipped with a system for protection against tampering.

In the method for protecting a photovoltaic plant 1 , the photovoltaic plant 1 has at least one photovoltaic module 2 equipped with a plurality of photovoltaic panels (preferably connected in series), an inverter 3 connected downstream of the photovoltaic modules 2, a protective interrupter 5 inserted between the inverter and the photovoltaic module.

The photovoltaic plant 1 is also equipped with at least one protective device 9, preferably inserted in a branch 4 connecting the photovoltaic module 2 to the inverter, for detecting the presence of an electric arc in the plant 1 and for generating a fault signal; the fault signal is a signal for activating a coil 8 (that is, a relay) for opening the protective interrupter 5. The installation of the protective device 9 comprises steps of coupling the sensor 10 of the protective device 9 to the plant 1, and adjusting (that is, setting up) the protective device 9, to adapt the device 9 to the plant 1 to which it is coupled.

The coupling of the protective device 9 to the plant 1 comprises an insertion of a cable, forming the branch 4 connecting the photovoltaic module 2 to the inverter 3, in a through hole of the protective device 9; the through hole is formed by a ring made of ferromagnetic material forming the sensor 10.

The adjustment of the protective device 9 comprises a step of setting up a reference value of the voltage of the comparator 13; further, it comprises a step of setting up a predetermined time interval (for the timer 15, that is, for the processor 14).

The processor 14 is programmed to generate the fault signal as a function of a situation in which the reference value is exceeded by the signal detected by the sensor 10, at least at two successive times after the predetermined time interval.

These adjustment steps occur after test steps performed on the photovoltaic plant 1, in two operating conditions: in the presence of a simulated electric arc and in the absence of an electric arc in the plant, but with the plant operating (in its normal operating condition).

Preferably, these tests are performed under poor lighting conditions of the photovoltaic panels, for example during dusk or at night. In effect, it was found that, surprisingly, the frequency spectrum affected by the signal generated by the photovoltaic arc is wider and less intense in poor conditions lighting of the panels, thereby causing a particularly critical situation for detecting the fault by the device 9.

The adjustment of the protective device comprises a setting up, that is, an adjustment of the band-pass filter of the conditioning stage 12.

According to the invention, the adjustment of the protective device 9 with particular reference to the conditioning stage 12, comprises a selection of a filter from three or more band-pass filters, defining respective bands occupying different and consecutive portions of a predetermined frequency range. This adjustment is performed as a function of the amplitude values of the signal detected and conditioned (that is, downstream of the conditioning module), in the two above-mentioned operating configurations of the photovoltaic plant 1.

## Claims

1. A device (9) for protecting from electric arcs a direct current photovoltaic plant (1), having one or more photovoltaic modules (2) connected to an inverter (3), comprising:
- a sensor (10) provided with a ring made of ferromagnetic material and designed to generate a signal representative of a current passing through a cable inserted in the ring;
- a conditioning stage (12) comprising a band-pass filter, for conditioning the signal detected by the sensor;
- a threshold comparator (13) having a voltage reference value, for receiving as input the signal conditioned in the conditioning stage (12);
- a processor (14) for generating a fault signal at output of the device, the fault signal being responsive to an arc detection,
wherein the processor (14) is programmed to generate the fault signal if the amplitude of the signal detected and conditioned remains above the reference value for at least a predetermined time interval after exceeding said value, wherein the conditioning stage (12) has three or more band-pass filters, operatively connected in parallel and defining bands occupying different and consecutive portions of a predetermined frequency range,
**characterised in that**
- the voltage reference value of the threshold comparator (13) is set and adjustable,
- the device comprises a counter, wherein
- the processor (14) is programmed to activate the counter (15) in response to a situation in which the signal detected and conditioned exceeds the reference value of the comparator (13), whereby the predetermined time interval is detected by the processor through the activation of the counter in response to said situation,
- the device comprises a selector,
- said band-pass filters can be selected selectively and alternatively one to another, wherein each of said band-pass filters can be inserted or removed, according to the operation position of the selector.

2. The device (9) according to claim 1, wherein the processor (14) is designed to allow adjustment of said predetermined time interval.

3. The device (9) according to claim 1 or 2, comprising a memory (16) and/or a light indicator (17) having at least one ON configuration and one OFF configuration, where the processor is programmed to record in the memory (16) data representative of an event of generation of the fault signal, and/or to set the light indicator (17) to the ON configuration.

4. The device (9) according to any one of the preceding claims, wherein each band-pass filter of the band-pass filters of the conditioning stage (12) has a passband with a width of less than 250 kHz located in a frequency range of between 10 kHz and 2.5 MHz.

5. The device (9) according to any one of the preceding claims, wherein the sensor (10) comprises a plurality of rings (101) made of ferromagnetic material, said rings being embedded in a matrix (102).

6. The device (9) according to any one of the preceding claims, comprising:
- an electronic card (11) which includes the conditioning stage (12), the threshold comparator (13), the processor (14) and the counter (15);
- a connecting cable (19), for connecting the sensor (10) to the electronic card (11), with the possibility of positioning the sensor (10) spaced from the electronic card (11).

7. The device (9) according to any of the previous claims, wherein each band-pass filter of the band-pass filters of the conditioning stage (12) has a passband having a width of between 5 kHz and 10 kHz.

8. A photovoltaic plant (1), comprising:
- one or more photovoltaic modules (2), each comprising a plurality of photovoltaic panels;
- an inverter (3) connected downstream of the photovoltaic modules (2);
- one or more protective interrupters (5) inserted between the inverter (3) and the photovoltaic modules (2);
- at least one protective device (9), inserted in a branch (4) connecting the photovoltaic modules (2) to the inverter (3), for detecting the presence of an electric arc in the plant (1) and for generating a fault signal and transmitting it to the protective interrupter (5) so as to command its opening,
**characterised in that** the protective device (9) is a protective device according to any one of the preceding claims.

9. A method for protecting a direct current photovoltaic plant (1) having at least one photovoltaic module (2) provided with a plurality of photovoltaic panels, an inverter (3) connected downstream of the photovoltaic module (2), a protective interrupter (5) inserted between the inverter (3) and the photovoltaic module (2), and a protective device (9), inserted in a branch (4) connecting the photovoltaic module (2) to the inverter (3), for detecting the presence of an electric arc in the plant (1) and for generating a fault signal responsive to an arc detection and transmitting it to the protective interrupter (5) so as to command its opening,
wherein an installation of the protective device (9) comprises a steps of inserting of a cable, forming the branch (4) connecting the photovoltaic module (2) to the inverter (3), in a through hole of the protective device (9), said through hole being formed by a ring made of ferromagnetic material forming a sensor (10),
**characterised in that** the installation of the protective device (9) comprises a step of adjusting the protective device (9), by setting a reference voltage value of a threshold comparator (13) and by setting a predetermined time interval, where a processor (14) of the protective device (9) is programmed to generate the fault signal if said reference value is exceeded by a signal downstream of a conditioning stage (12) connected downstream of the sensor (10) and upstream of the comparator (13), and if the amplitude of the signal detected and conditioned remains above said reference value for at least a predetermined time interval, wherein the predetermined time interval is detected by the processor through a counter, by activating the counter in response to a situation in which the reference value of the comparator is exceeded by the detected signal,
wherein the conditioning stage (12) includes a plurality of band-pass filters which can be inserted or removed according to an operating position of a selector, so that the band-pass filters of the plurality are selected selectively and alternatively through the selector.

10. The method according to claim 9, wherein the adjustment of the protective device (9) comprises further a setting of a band-pass filter defined by the conditioning stage (12) and intended to condition the signal detected by the conditioning stage sensor (10), upstream of the comparator, wherein each band-pass filter of said band-pass filters has a passband with a width of less than 250 kHz located in a frequency range of between 10 kHz and 2.5 MHz.

11. The method according to any one of claims 9 to 10, wherein the conditioning stage (12), the threshold comparator (13), the processor (14) and the counter (15) are included in an electronic card (11), which is positioned spaced from the sensor (10) and connected to it by a connecting cable (19).

## Patentansprüche

1. Vorrichtung (9) zum Schutz einer Gleichstromphotovoltaikanlage (1), aufweisend ein oder mehrere Photovoltaikmodule (2), die an einen Wechselrichter (3) angeschlossen sind, vor Lichtbögen, umfassend:
- einen Sensor (10), der mit einem Ring aus ferromagnetischem Material versehen und ausgestaltet ist, um ein Signal zu generieren, das repräsentativ für einen Strom ist, der durch ein in den Ring eingesetztes Kabel fließt;
- eine Aufbereitungsstufe (12), umfassend ein Bandbreitenfilter zum Aufbereiten des vom Sensor erfassten Signals;
- einen Schwellwertkomparator (13), aufweisend einen Spannungsreferenzwert, zum Empfangen des in der Aufbereitungsstufe (12) aufbereiteten Signals als Eingabe;
- einen Prozessor (14), um als Ausgabe der Vorrichtung ein Fehlersignal zu generieren, wobei das Fehlersignal auf eine Lichtbogenerfassung reagiert,
wobei der Prozessor (14) programmiert ist, um das Fehlersignal zu generieren, wenn die Amplitude des erfassten und aufbereiteten Signals über dem Referenzwert mindestens für ein vorgegebenes Zeitintervall nach dem Überschreiten des Werts bleibt, wobei die Aufbereitungsstufe (12) drei oder mehr Bandbreitenfilter aufweist, die betriebswirksam parallel geschaltet sind und Bandbreiten definieren, die unterschiedliche und aufeinanderfolgende Abschnitte eines vorgegebenen Frequenzbereichs einnehmen,
**dadurch gekennzeichnet, dass**
- der Spannungsreferenzwert des Schwellwertkomparators (13) eingestellt und justierbar ist;
- die Vorrichtung einen Zähler umfasst, wobei
- der Prozessor (14) programmiert ist, um den Zähler (15) als Reaktion auf eine Situation zu aktivieren, in der das erfasste und aufbereitete Signal den Referenzwert des Komparators (13) überschreitet, wodurch das vorgegebene Zeitintervall vom Prozessor durch die Aktivierung des Zählers als Reaktion auf diese Situation erfasst wird;
- die Vorrichtung einen Wähler umfasst;
- die Bandbreitenfilter selektiv und alternativ voneinander ausgewählt werden können, wobei ein jedes der Bandbreitenfilter je nach der Betriebsposition des Wählers eingefügt oder entfernt werden kann.

2. Vorrichtung (9) nach Anspruch 1, wobei der Prozessor (14) ausgestaltet ist, um die Justierung des vorgegebenen Zeitintervalls zu erlauben.

3. Vorrichtung (9) nach Anspruch 1 oder 2, umfassend einen Speicher (16) und/oder eine Lichtanzeige (17), aufweisend mindestens eine EIN-Konfiguration und eine AUS-Konfiguration, in der der Prozessor programmiert ist, um im Speicher (16) Daten aufzuzeichnen, die repräsentativ für ein Ereignis der Generierung des Fehlersignals sind, und/oder um die Lichtanzeige (17) in die EIN-Konfiguration zu setzen.

4. Vorrichtung (9) nach einem der vorhergehenden Ansprüche, wobei ein jedes Bandbreitenfilter der Bandbreitenfilter der Aufbereitungsstufe (12) eine Bandbreite mit einer Breite von mindestens 250 kHz aufweist, befindlich in einem Frequenzbereich zwischen 10 kHz und 2,5 MHz.

5. Vorrichtung (9) nach einem der vorhergehenden Ansprüche, wobei der Sensor (10) eine Vielzahl von Ringen (101) umfasst, die aus ferromagnetischem Material bestehen, wobei diese Ringe in eine Matrix (102) eingebettet sind.

6. Vorrichtung (9) nach einem der vorhergehenden Ansprüche, umfassend:
- eine Elektronikkarte (11), die die Aufbereitungsstufe (12), den Schwellwertkomparator (13), den Prozessor (14) und den Zähler (15) umfasst;
- ein Verbindungskabel (19), um den Sensor (10) mit der Elektronikkarte (11) zu verbinden, mit der Möglichkeit, den Sensor (10) beabstandet von der Elektronikkarte (11) zu positionieren.

7. Vorrichtung (9) nach einem der vorhergehenden Ansprüche, wobei ein jedes Bandbreitenfilter der Bandbreitenfilter der Aufbereitungsstufe (12) eine Bandbreite mit einer Breite zwischen 5 kHz und 10 kHz aufweist.

8. Photovoltaikanlage (1), umfassend:
- ein oder mehrere Photovoltaikmodule (2), von denen ein jedes eine Vielzahl von Photovoltaikpaneelen umfasst;
- einen Wechselrichter (3), der stromabwärts der Photovoltaikmodule (2) angeschlossen ist;
- einen oder mehrere Schutzschalter (5), die zwischen dem Wechselrichter (3) und den Photovoltaikmodulen (2) eingesetzt sind;
- mindestens eine Schutzvorrichtung (9), die in einen Abzweig (4) eingefügt ist, der die Photovoltaikmodule (2) mit dem Wechselrichter (3) verbindet, um die Anwesenheit eines Lichtbogens in der Anlage (1) zu erfassen und um ein Fehlersignal zu generieren und dieses an den Schutzschalter (5) zu übermitteln, sodass dessen Öffnung geschaltet wird,
**dadurch gekennzeichnet, dass** es sich bei der Schutzvorrichtung (9) um eine Schutzvorrichtung nach einem der vorhergehenden Ansprüche handelt.

9. Verfahren zum Schutz einer Gleichstromphotovoltaikanlage (1), aufweisend mindestens ein Photovoltaikmodul (2), versehen mit einer Vielzahl von Photovoltaikpaneelen, einen Wechselrichter (3), der stromaufwärts des Photovoltaikmoduls (2) angeschlossen ist, einen Schutzschalter (5), der zwischen dem Wechselrichter (3) und dem Photovoltaikmodul (2) eingefügt ist, und eine Schutzvorrichtung (9), die in einen Abzweig (4) eingefügt ist, der das Photovoltaikmodul (2) mit dem Wechselrichter (3) verbindet, um die Anwesenheit eines Lichtbogens in der Anlage (1) zu erfassen und um ein Fehlersignal zu generieren, das auf eine Bogenerfassung reagiert, und um dieses an den Schutzschalter (5) zu übermitteln, sodass dessen Öffnung geschaltet wird, wobei eine Installation der Schutzvorrichtung (9) einen Schritt zum Einfügen eines Kabels, formend den Abzweig (4), der das Photovoltaikmodul (2) mit dem Wechselrichter (3) verbindet, in ein Durchführungsloch der Schutzvorrichtung (9) umfasst, wobei das Durchführungsloch durch einen Ring aus ferromagnetischem Material geformt ist, formend einen Sensor (10), **dadurch gekennzeichnet, dass** die Installation der Schutzvorrichtung (9) einen Schritt zum Justieren der Schutzvorrichtung (9) umfasst, indem ein Referenzspannungswert eines Schwellwertkomparators (13) festgelegt wird und indem ein vorgegebenes Zeitintervall festgelegt wird, in dem ein Prozessor (14) der Schutzvorrichtung (9) programmiert ist, um das Fehlersignal zu generieren, wenn der Referenzwert von einem Signal stromabwärts einer Aufbereitungsstufe (12), angeschlossen stromabwärts des Sensors (10) und stromaufwärts des Komparators (13), überschritten wird, und wenn die Amplitude des erfassten und aufbereiteten Signals für mindestens ein vorgegebenes Zeitintervall über dem Referenzwert bleibt, wobei das vorgegebene Zeitintervall vom Prozessor durch einen Zähler erfasst wird, indem der Zähler als Reaktion auf eine Situation aktiviert wird, in der der Referenzwert des Komparators vom erfassten Signal überschritten wird,
wobei die Aufbereitungsstufe (12) eine Vielzahl von Bandbreitenfiltern einschließt, die je nach einer Betriebsposition eines Wählers eingefügt oder entfernt werden können, sodass die Bandbreitenfilter der Vielzahl selektiv und alternativ durch den Wähler ausgewählt werden.

10. Verfahren nach Anspruch 9, wobei die Justierung der Schutzvorrichtung (9) zudem eine Einstellung eines Bandbreitenfilters umfasst, definiert durch die Aufbereitungsstufe (12) und dazu bestimmt, das Signal aufzubereiten, das vom Aufbereitungsstufensensor (10) erfasst wurde, stromaufwärts des Komparators, wobei ein jedes Bandbreitenfilter der Bandbreitenfilter eine Bandbreite mit einer Breite von weniger als 250 kHz aufweist, befindlich in einem Frequenzbereich zwischen 10 kHz und 2,5 MHz.

11. Verfahren nach einem der Ansprüche 9 bis 10, wobei die Aufbereitungsstufe (12), der Schwellwertkomparator (13), der Kompressor (14) und der Zähler (15) in einer Elektronikkarte (11) eingeschlossen sind, die beabstandet vom Sensor (10) positioniert und mit diesem durch ein Verbindungskabel (19) verbunden ist.

## Revendications

1. Dispositif (9) de protection contre les arcs électriques d'une centrale photovoltaïque à courant continu (1), ayant un ou plusieurs modules photovoltaïques (2) connectés à un onduleur (3), comprenant :
- un capteur (10) muni d'un anneau en matériau ferromagnétique et conçu pour générer un signal représentatif d'un courant passant dans un câble inséré dans l'anneau ;
- un étage de conditionnement (12) comprenant un filtre passe-bande, pour conditionner le signal détecté par le capteur ;
- un comparateur à seuil (13) ayant une valeur de référence de tension, pour recevoir en entrée le signal conditionné dans l'étage de conditionnement (12) ;
- un processeur (14) pour générer un signal de défaut à la sortie du dispositif, le signal de défaut étant sensible à une détection d'arc,
dans lequel le processeur (14) est programmé pour générer le signal de défaut si l'amplitude du signal détecté et conditionné reste au-dessus de la valeur de référence pendant au moins un intervalle de temps prédéterminé après avoir dépassé ladite valeur, dans lequel l'étage de conditionnement (12) a trois filtres passe-bande ou plus, connectés de manière opérationnelle en parallèle et définissant des bandes occupant des portions différentes et consécutives d'une gamme de fréquences prédéterminée,
**caractérisé en ce que**
- la valeur de référence de la tension du comparateur à seuil (13) est réglée et réglable,
- le dispositif comprend un compteur, dans lequel
- le processeur (14) est programmé pour activer le compteur (15) en réponse à une situation dans laquelle le signal détecté et conditionné dépasse la valeur de référence du comparateur (13), de sorte que l'intervalle de temps prédéterminé est détecté par le processeur par l'activation du compteur en réponse à ladite situation,
- le dispositif comprend un sélecteur,
- lesdits filtres passe-bande peuvent être sélectionnés sélectivement et alternativement l'un par rapport à l'autre, dans lequel chacun desdits filtres passe-bande peut être inséré ou retiré, selon la position de fonctionnement du sélecteur.

2. Dispositif (9) selon la revendication 1, dans lequel le processeur (14) est conçu pour permettre le réglage dudit intervalle de temps prédéterminé.

3. Dispositif (9) selon la revendication 1 ou 2, comprenant une mémoire (16) et/ou un indicateur lumineux (17) ayant au moins une configuration ON et une configuration OFF, où le processeur est programmé pour enregistrer dans la mémoire (16) des données représentatives d'un événement de génération du signal de défaut, et/ou pour mettre l'indicateur lumineux (17) dans la configuration ON.

4. Dispositif (9) selon l'une quelconque des revendications précédentes, dans lequel chaque filtre passe-bande des filtres passe-bande de l'étage de conditionnement (12) présente une bande passante de largeur inférieure à 250 kHz située dans une gamme de fréquences comprise entre 10 kHz et 2,5 MHz.

5. Dispositif (9) selon l'une quelconque des revendications précédentes, dans lequel le capteur (10) comprend une pluralité d'anneaux (101) en matériau ferromagnétique, lesdits anneaux étant noyés dans une matrice (102).

6. Dispositif (9) selon l'une quelconque des revendications précédentes, comprenant :
- une carte électronique (11) qui inclut l'étage de conditionnement (12), le comparateur à seuil (13), le processeur (14) et le compteur (15) ;
- un câble de connexion (19), pour connecter le capteur (10) à la carte électronique (11), avec la possibilité de positionner le capteur (10) à distance de la carte électronique (11).

7. Dispositif (9) selon l'une quelconque des revendications précédentes, dans lequel chaque filtre passe-bande des filtres passe-bande de l'étage de conditionnement (12) présente une bande passante dont la largeur est comprise entre 5 kHz et 10 kHz.

8. Centrale photovoltaïque (1), comprenant :
- un ou plusieurs modules photovoltaïques (2), comprenant chacun une pluralité de panneaux photovoltaïques ;
- un onduleur (3) connecté en aval des modules photovoltaïques (2) ;
- un ou plusieurs interrupteurs de protection (5) insérés entre l'onduleur (3) et les modules photovoltaïques (2) ;
- au moins un dispositif de protection (9), inséré dans une branche (4) reliant les modules photovoltaïques (2) à l'onduleur (3), pour détecter la présence d'un arc électrique dans la centrale (1) et pour générer un signal de défaut et le transmettre à l'interrupteur de protection (5) afin de commander son ouverture, **caractérisée en ce que** le dispositif de protection (9) est un dispositif de protection selon l'une quelconque des revendications précédentes.

9. Procédé de protection d'une centrale photovoltaïque à courant continu (1) ayant au moins un module photovoltaïque (2) pourvu d'une pluralité de panneaux photovoltaïques, un onduleur (3) connecté en aval du module photovoltaïque (2), un interrupteur de protection (5) inséré entre l'onduleur (3) et le module photovoltaïque (2), et un dispositif de protection (9), inséré dans une branche (4) reliant le module photovoltaïque (2) à l'onduleur (3), pour détecter la présence d'un arc électrique dans la centrale (1) et pour générer un signal de défaut en réponse à une détection d'arc et le transmettre à l'interrupteur de protection (5) de manière à commander son ouverture, dans lequel une installation du dispositif de protection (9) comprend une étape d'insérer un câble, formant la branche (4) reliant le module photovoltaïque (2) à l'onduleur (3), dans un trou traversant du dispositif de protection (9), ledit trou traversant étant formé par un anneau en matériau ferromagnétique formant un capteur (10),
**caractérisé en ce que** l'installation du dispositif de protection (9) comprend une étape de régler le dispositif de protection (9), en fixant une valeur de tension de référence d'un comparateur de seuil (13) et en fixant un intervalle de temps prédéterminé, où un processeur (14) du dispositif de protection (9) est programmé pour générer le signal de défaut si ladite valeur de référence est dépassée par un signal en aval d'un étage de conditionnement (12) connecté en aval du capteur (10) et en amont du comparateur (13), et si l'amplitude du signal détecté et conditionné reste au-dessus de ladite valeur de référence pendant au moins un intervalle de temps prédéterminé, dans lequel l'intervalle de temps prédéterminé est détecté par le processeur par l'intermédiaire d'un compteur, en activant le compteur en réponse à une situation dans laquelle la valeur de référence du comparateur est dépassée par le signal détecté,
dans lequel l'étage de conditionnement (12) inclut une pluralité de filtres passe-bande qui peuvent être insérés ou retirés selon une position de fonctionnement d'un sélecteur, de sorte que les filtres passe-bande de la pluralité sont sélectionnés sélectivement et alternativement par l'intermédiaire du sélecteur.

10. Procédé selon la revendication 9, dans lequel le réglage du dispositif de protection (9) comprend en outre un réglage d'un filtre passe-bande défini par l'étage de conditionnement (12) et destiné à conditionner le signal détecté par le capteur de l'étage de conditionnement (10), en amont du comparateur, dans lequel chaque filtre passe-bande desdits filtres passe-bande a une bande passante d'une largeur inférieure à 250 kHz située dans une gamme de fréquences comprise entre 10 kHz et 2,5 MHz.

11. Procédé selon l'une quelconque des revendications 9 à 10, dans lequel l'étage de conditionnement (12), le comparateur à seuil (13), le processeur (14) et le compteur (15) sont inclus dans une carte électronique (11), qui est positionnée à distance du capteur (10) et reliée à celui-ci par un câble de connexion (19).
